# EUROPEAN PATENT APPLICATION

(11) **EP 1 429 273 A1**
(43) Date of publication of application: **16.06.2004**
(21) Application number: 03445136.9
(22) Date of filing: 25.11.2003
(51) Int. Cl.: G06F 17/60, H04N 7/173

(54) **Interactive media transmission method and system for direct purchase of goods and services over a tv-broadcast network**

(30) Priority: 26.11.2002 SE 0203493
(71) Applicant: Namwar, Kianoush, 164 30 Kista (SE)
(72) Inventor: Namwar, Kianoush, 164 30 Kista (SE)
(74) Representative: Wihlsson, Joakim Per Magnus

(57) **Abstract**

The invention relates to a solution for communication of interactive media, wherein a central control unit (100) broadcasts a composite signal (S(C, D) including a TV-signal component (C) and an associated data signal component (D), which pertains to entities represented by the TV-signal component (C), such as products and/or services. The composite signal (S(C, D) is transmitted from a transmission resource (130), via a primary signal distribution medium (140, 150), to at least one subscriber receiver (111a, 112a, 113a), which each is associated with at least one user. A database (110), connected to the central control unit (100), contains user-specific authorization data pertaining to each of at least one user of the system, such that the users may effect purchases by specifying relevant authorization data to the central control unit (100). A supplementary signal distribution medium (160) is arranged to transmit order messages (msg_{O}) to the central control unit (100), which are generated in the subscriber receivers (111a) on basis of corresponding ordering instructions from the users and relate to entities (E) that are represented by the TV-signal component (C). Order confirmation messages (cf₁) generated by the central control unit (100) in response to the order messages (msg_{O}) are also transmitted over the supplementary signal distribution medium (160), however in the opposite direction. A communication unit (111b) is associated with each user, and is adapted to receive the order confirmation messages (cf₁) and based thereon present corresponding order confirmation information to the user, receive a user confirmation input containing the user-specific data for the user, produce re-confirmation messages (cf₂) based on the order confirmation messages (cf₁) and the user confirmation input, and transmit the re-confirmation message (cf₂) to the central control unit (100).

## Description

### THE BACKGROUND OF THE INVENTION AND PRIOR ART

The present invention relates generally to communication of interactive media between a central communication point and a plurality of users. Specifically, the invention relates to an interactive media transmission method according to claim 1 and a system according to the preamble of claim 15.

Many different solutions are known for transmitting signals publicly via electronic mass distribution media, such as radio broadcasting and terrestrial television. In addition to that, solutions for transmitting the corresponding signals via cable networks and geostationary satellites have now been available for a longer period of time. In recent years, it has also become possible to, by various means, limit the access to the distributed signals by means of different kinds of digital coding, such that the signals may only be decoded in authorized receivers. The security accomplished by the strengthened linking between the subscriber units and the authorized subscribers (or users) which is required for these systems opens up for other security demanding solutions, for example e-commerce services.

The patent application US 2002/0104090 describes a system for providing advertising services where an interactive advertisement is presented to a customer via a TV-commercial. If a customer indicates an interest in the advertised product, the system automatically, based on the contents of a database, correlates the customer to a merchant who is considered to be appropriate with respect to the specific customer.

The international patent application WO00/30345 discloses a solution for associating preferences with individual users. Thereby, parental control/rating ceiling and permission to buy impulse pay-per-view programs or engage in e-commerce transactions may be controlled.

The patent application US 2002/0120935 describes an interactive media system, wherein if an advertised product is available in different versions, a version of the product being expected to closest match the preferences of a particular customer may be selected based on demographic information in combination with customer preference information. The system supports so-called single action ordering via activation of an icon on the screen.

However, there is no solution in the prior art, which on one hand provides the customer with adequate product information, and on the other hand is reliable, secure and user-friendly enough to allow fully atomized electronic purchases via the subscriber receiver.

### SUMMARY OF THE INVENTION

The object of the present invention is therefore to alleviate the above problems and accomplish a solution, which increases the commercial attraction of electronic mass distribution media for advertisers by facilitating the means through which the advertised products and services may actually be purchased.

It is also an object of the invention to satisfy the users' (i.e. the potential customers') desire to conveniently acquire any products and services that they may be interested in.

According to one aspect of the invention, these objects are achieved by an interactive media transmission method, which includes the following steps. First, a composite signal containing a TV-signal component and an associated data signal component which includes information pertaining to entities represented by the TV-signal component is presumed to be a broadcast to a plurality of subscriber receivers. At least one subscriber receiver receives the composite signal, and decodes the TV-signal component and the associated data signal component respectively. A first user is then presumed to generate an ordering instruction relating to at least one entity which is represented by the TV-signal component, for instance by activating a menu in a first subscriber receiver via a remote control linked thereto. Based on the ordering instruction, the first subscriber receiver generates an order message, which is transmitted to a central control unit. The central control unit receives the order message and generates in response thereto an order confirmation message, which is transmitted to a first communication unit associated with the first subscriber receiver. The order confirmation message is received in the first communication unit and corresponding order confirmation information is presented therein, such that the user may verify that the data matches his/her ordering instruction. If this is so, a re-confirmation message is produced in the first communication unit based on the order confirmation information and a user re-confirmation input. Finally, the re-confirmation message is transmitted to the central control unit for effecting the purchase of the specified entity.

This procedure is advantageous because thereby a viewer/customer is enabled to effortlessly initiate the purchase of a certain product or service in immediate connection with a corresponding commercial being presented via his/her subscriber receiver, e.g. a TV-set. Moreover, the viewer/customer may accept (or decline) the purchase in a comparatively uncomplicated manner without taking any unnecessary security risks, such as the risk of causing a fraudulent use of his/her credit card etc.

According to a preferred embodiment of this aspect of the invention, the method includes the steps of receiving the re-confirmation message in the central control unit, and transmitting an external order message to a server, which is associated with a provider of an entity defined in the order message. Thus, the purchased product or service may be delivered to the customer with a minimum of intermediaries which, in most cases, is desirable.

According to another preferred embodiment of this aspect of the invention, the method includes the steps of arranging for the delivery of the entity; and effecting a transaction corresponding to a price of the entity ordered by the user. This is desirable because it enables purchases to be completed entirely within the proposed system.

According to yet another preferred embodiment of this aspect of the invention, the generating of the ordering instructions involves receiving a primary authorization code, which is associated with the first user. Thereby, the user may provide a first indication that his/her identity is authorized to effect a purchase in the name of the specified user. Of course, this is a highly desired security feature.

According to a preferred embodiment of this aspect of the invention, the method contains the step of verifying the primary authorization code in the first subscriber receiver. The order message is transmitted to the central control unit only if the primary authorization code is correct. Thus, the primary authorization code is verified locally, which reduces the amount of data that needs to be transmitted over the supplementary signal distribution medium.

According to a preferred embodiment of this aspect of the invention, the user re-confirmation input involves receiving a corresponding secondary authorization code, which likewise is associated with the first user. In order to further enhance the security, the secondary authorization code should be different from the primary authorization code. Both the primary and the secondary authorization codes may include an arbitrary combination of characters, such as numbers and alphabetic letters. Moreover, the secondary authorization code may be a single-use code, for instance derived from a code generator or a scratch-off card.

According to a preferred embodiment of this aspect of the invention, the method includes the steps of verifying the secondary authorization code in the central control unit, and completing a purchase of the entity only if the secondary authorization code is correct. Thus, the secondary authorization code is verified externally, which vouches for a high security level.

According to a preferred embodiment of this aspect of the invention, before transmitting the re-confirmation message, the method involves transmitting a page signal from the central control unit to the first subscriber receiver. The page signal includes the order confirmation information. By means of the page signal, the user is thus prompted to initiate the production of the re-confirmation message, which further speeds up the procedure.

According to a preferred embodiment of this aspect of the invention, the method also includes the following steps. First, the page signal is received in the first subscriber receiver. Then, the user first enters the secondary authorization code into the first communication unit. After that, the re-confirmation message is transmitted to the central control unit by, setting up a telephone connection to the central control unit, and subsequently forwarding the user specific data to the central control unit via this telephone connection. The re-confirmation message is thus efficiently fed back to the central control unit, such that the purchase thereafter may be completed.

According to a preferred embodiment of this aspect of the invention, the method instead includes the following additional steps. First, the page signal is received in the first subscriber. Then, an Internet connection is established between the first communication unit and the central control unit. After that, the user is prompted to enter the secondary authorization code into the first communication unit (typically a computer), and finally, the re-confirmation message is transmitted to the central control unit via the Internet connection, such that the purchase thereafter may be completed.

According to another aspect of the invention, these objects are by the initially described system, which is characterized in that a communication unit is associated with each user. This unit is adapted to receive the order confirmation message sent out from the central control unit, and based thereon present corresponding order confirmation information to the user. The communication unit is also adapted to receive a user confirmation input, which contains the user-specific data for a first user that is associated with the first subscriber receiver. Additionally, the communication unit is adapted to produce a re-confirmation message based on the order confirmation message plus the user confirmation input. Moreover, the unit is adapted to transmit this re-confirmation message to the central control unit.

The proposed system is advantageous, since it enables a viewer/customer to initiate purchases of products and/or services in direct connection with the presentation of a corresponding commercial, without sacrificing any security aspects, for instance with respect to fraud.

According to a preferred embodiment of this aspect of the invention, the user specific identification data includes a first authorization code to be entered by the first user in order to produce a valid order message and a second authorization code to be entered by the first user in order to produce a valid re-confirmation message. Thus, when producing the order- and the re-confirmation messages, the user must both provide a first and a second indication that his/her identity is authorized to effect a purchase in the name of the specified user. This vouches for a high security of the transaction.

According to another preferred embodiment of this aspect of the invention, the user-specific authorization data includes relevant payment information (e.g. credit card data and/or bank account numbers), which is required for effecting purchases in respect of each of the at least one user of the system. Thereby, no sensitive information needs to be transmitted in connection with the purchases.

According to yet another preferred embodiment of this aspect of the invention, the first subscriber receiver comprises the first communication unit. This is advantageous because it renders the over-all subscriber arrangement very simple.

According to another preferred embodiment of this aspect of the invention, the first communication unit is instead a telephone terminal. Thereby, an uncomplicated and fast connection may be established between the user location and the central control unit in most types of environments.

According to yet another preferred embodiment of this aspect of the invention, the first communication unit is instead a computer terminal with an interface towards the Internet. Hence, a connection width comparatively large bandwidth may be accomplished between the user location and the central control unit.

According to yet another preferred embodiment of this aspect of the invention, the first subscriber receiver is associated with a positioning equipment for determining the geographical position of the first subscriber receiver. Moreover, the first subscriber receiver is adapted to present a content that is decoded from the associated data signal component on basis of a position signal from the positioning equipment, such that the presented content has a relatively high degree of relevance to a user associated being with the first subscriber receiver. Thus, for instance, only those retailers that are located most closely to the user may be presented to the user.

To sum up, the invention efficiently fulfills the advertisers' and the viewers'/customers' demand for an uncomplicated and secure trade of products and services via a communication network.

### BRIEF DESCRIPTION OF THE DRAWINGS

The present invention is now to be explained more closely by means of preferred embodiments, which are disclosed as examples, and with reference to the attached drawings.
- Figure 1: shows a system according to an embodiment of the invention,
- Figure 2: illustrates, by means of a flow chart the general method performed in the central control unit according the invention, and
- Figure 3: illustrates, by means of a flow chart the general method performed in a subscriber receiver and a communication unit respectively according the invention.

### DESCRIPTION OF PREFERRED EMBODIMENTS OF THE INVENTION

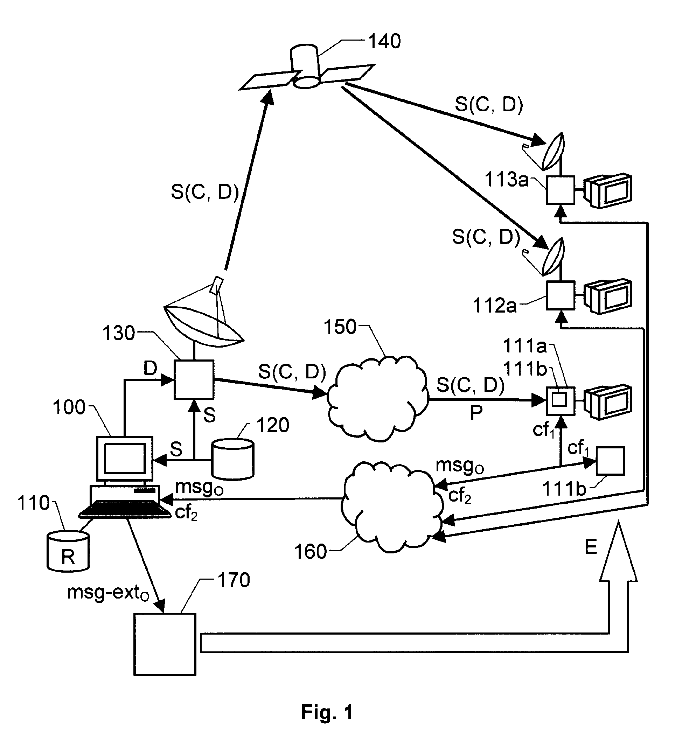

A system for interactive media communication according to an embodiment of the invention is shown in figure 1. The illustrated system includes a central control unit 100, which is adapted to broadcast a composite signal S(C, D) via a transmission resource 130. The composite signal S(C, D) includes a TV-signal component C and an associated data signal component D, which pertains to entities E represented by the TV-signal component C. Typically, this means that the TV-signal component C represents a commercial for a product or a service, and the data signal component D contains information relating to the product/ service that may be interesting for someone who intends to purchase it. Thus, the component D may be product specifications, data sheets, a listing over retailers, pricing etc.

According to a preferred embodiment of the invention, some or all of the subscriber receivers are associated with a respective positioning equipment, such as a GPS-receiver (not shown), for determining the receiver's geographical position. Thereby, a subscriber receiver may be adapted to present a content that is decoded from the associated data signal component on basis of a position signal from the positioning equipment, such that the presented content has a relatively high degree of relevance to a user associated being with the subscriber receiver. For example, only those manufacturers, retailers or service stations that are located most closely to a user may be presented to the user. As an alternative to the positioning equipment, the subscriber receiver may be associated with some other kind of geographical position indication, for example a memory in which country code data or zip code data is stored.

Technically, the signal components C and D may originate from any medium or location which has an interface towards the transmission resource 130. However preferably, the signal components C and D are obtained from a central content resource 120. A database 110 contains user-specific authorization data R pertaining to each of at least one user of the system. This data R at least includes customer number and authorization codes to be entered by the user in order to effect purchases and relevant payment information, such as credit card data and/or bank account numbers. Moreover, the database 110 may contain information about each user's name, address and preferably profile data, such as age, occupation, is connected to the central control unit 100, such that the central control unit 100 is able to verify the identities of any users that prove to be interested in acquiring some of the entities that are advertised in the system.

Preferably, user identity data, i.e. unique information which represents the user, is stored on a smart card, such as a customer identity card, a subscriber card, or similar. Thereby, a particular user may place his/her card in an alternative subscriber receiver, and instead interact with the system via this receiver, by for example, viewing programs and purchasing goods and services.

The transmission resource 130 has an interface towards at least one primary signal distribution medium 140; 150 through which the composite signal S(C, D) may be transmitted to a multitude of subscriber receivers 111a, 112a, 113a, which each is associated with at least one user. The figure 1 shows a first distribution medium which is accomplished via a satellite link 140 and a second distribution medium which is accomplished via a cable network 150. Of course, other types of distribution media are also conceivable, such as terrestrial broadcasting. The central control unit 100 is also connected to a supplementary signal distribution medium 160, for example a telecommunication network, a satellite link or the Internet, over which addressed e-commerce related signals may be transmitted between the users and the central control unit 100.

In order to illustrate the invention, an exemplary e-purchase will now be described with reference to the figure 1. A first user associated with a first subscriber receiver 111 a is presumed to be interested in purchasing a particular entity E (e.g. a product or a service) which is advertised in a commercial C that is decoded in his receiver 111a. Alternatively, the entity E may be a product (such as a record copy, a film copy or another product) occurring in a regular program or show (e.g. introduced by means of "product placement"). After having reviewed the corresponding data D, the first user determines to place an order for the entity E. Therefore, he enters an ordering instruction into his subscriber receiver 111a relating to this entity E (for example by manipulating the remote control). Based on the ordering instruction, the first subscriber receiver 111a then generates a corresponding order message msgₒ and transmits it to the central control unit 100 via the supplementary signal distribution medium 160. In order to produce a valid order message msgₒ, the first user must enter a primary authorization code along with the ordering instruction. Preferably, the primary authorization code is verified locally in the first subscriber receiver 111a, and an order message msgₒ, is only sent if a correct primary authorization code is entered.

Provided that the primary authorization code is correct with respect to the first user (i.e. a valid order message msgₒ is sent) the central control unit 100 generates a corresponding order confirmation message cf₁, which describes the ordered entity E. The order confirmation message cf₁ is then transmitted to a first communication unit 111 b being associated with the first user. The order confirmation message cf₁ is sent via the supplementary signal distribution medium 160. The first communication unit 111b receives the order confirmation message cf₁, and based thereon, presents order confirmation information therein to the first user. This information may contain additional ordering details, such as a request for the first user to specify a specific model, type or version of the ordered product, or to select a particular color and/or size. The order confirmation message cf₁ may also contain shipping information, such as order number and estimated delivery time (which, in turn, primarily depends on whether the ordered entity E is in stock or not). Thereby, based on the order confirmation message cf₁, the first user may decide to cancel his/her order at this stage, if the delivery time is deemed to be unacceptably long. In any case, the order confirmation message cf₁ is preferably stored in the first subscriber receiver 111a, or on any relevant smart card.

The first communication unit 111 b may either be included in the first subscriber receiver 111a, or be a separate unit, such as a telephone terminal or a computer terminal with an interface towards the Internet. In any case, the first communication unit 111b is provided with a bi-directional interface for communicating e-commerce related signals with the central control unit 100. Naturally, if the first authorization code turns out to be incorrect, no order confirmation message cf₁ will be sent. Alternatively, no order message msg₀ will be transmitted from the first communication unit 111b. However, a relevant error code may instead be presented to the first user.

According to a preferred embodiment of the invention, in connection with transmitting the order confirmation message cf₁, the central control unit 100 sends out a page signal P, which includes the order confirmation information, to the first subscriber receiver 111a. Thereby, the first user becomes informed about the existence of the order confirmation message cf₁ in a convenient manner, for example in the form of a on-screen indicator.

Provided that the contents of the order confirmation message cf₁ matches the first user request, he enters a user confirmation input containing user-specific data, such as a secondary authorization code, into the first communication unit 111 b. Preferably, the secondary authorization code is different from the primary authorization code in order to enhance the security. Based on the order confirmation message cf₁ and the user confirmation input, the first communication unit 111b produces a re-confirmation message cf₂, which is transmitted to the central control unit 100 via the supplementary signal distribution medium 160. Upon reception of the re-confirmation message cf₂, the central control unit 100 completes the purchase of the entity E, i.e. arranges for the delivery of the entity E and effects the corresponding transaction, i.e. withdraws money from the first user's bank account or bills him. All payments are preferably administered via the central control unit 100. Hence, according to one preferred embodiment of the invention, the TV- or cable operator also administers the database 110. Namely, in most cases, this operator already has access to the information necessary for billing its users.

According to another preferred embodiment of the invention, after having received the re-confirmation message cf₂, the central control unit 100 also transmits an external order message msg-extₒ to a server 170 which is associated with a provider of the entity E that is defined in the order message msgₒ. Thereby, the entity E may be delivered to the first user with a minimum of intermediaries.

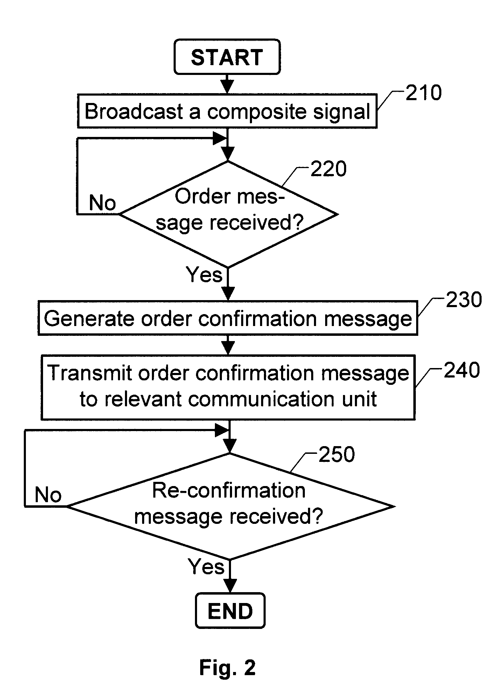

The general method performed in the central control unit according to the invention will now be described with reference to the flow chart in figure 2. A first step 210 broadcasts a composite signal comprising a TV-signal component and an associated data signal component, which includes information pertaining to entities represented by the TV-signal component. A following step 220 checks whether an order message has been received in respect of a user in the system, and if so, the procedure continues to a step 230. Otherwise, the procedure stays in the step 220.

The step 230 generates an order confirmation message in response to each received order message. A subsequent step 240 transmits the order confirmation messages to each respective communication unit which is associated with a user that has generated an order message. Then, a step 250 checks whether an order re-confirmation message has been received in respect of a user in the system, and if so, the procedure ends, or according to a preferred embodiment of the invention, an external order message is transmitted to a server which is associated with a provider of an entity defined in the user's order message. Preferably, an order re-confirmation message is only regarded as received in case it is accompanied by a valid secondary authorization code. If no (valid) re-confirmation message is received, the procedure stays in the step 250.

Naturally, the composite signal is normally also broadcast in parallel with the execution of all the steps 220 - 250.

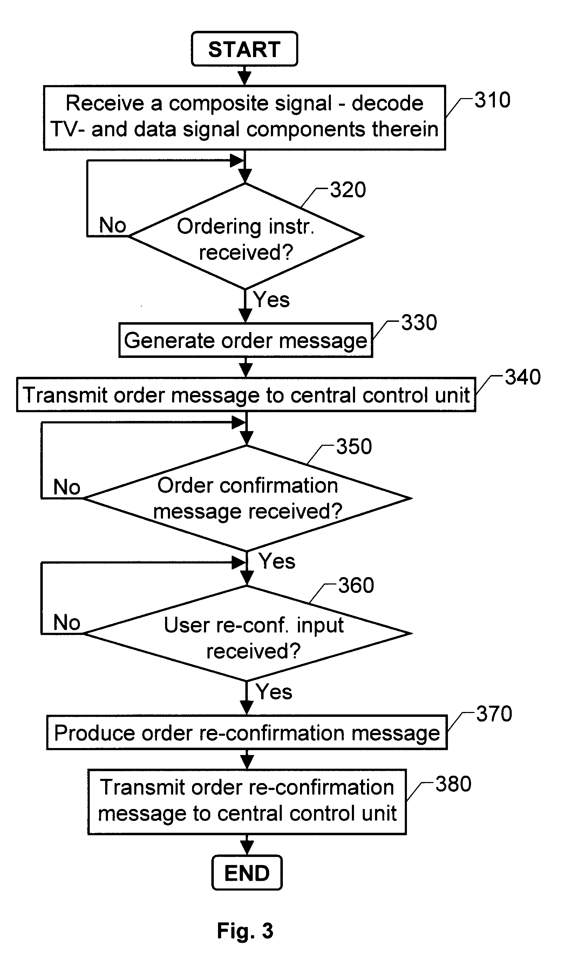

The general method performed in a subscriber receiver and an associated communication unit according to the invention will now be described with reference to the flow chart in figure 3.

A broadcast composite signal containing a TV-signal component and an associated data signal component, which includes information pertaining to entities represented by the TV-signal component is presumed to be received in a first step 310. A following step 320 checks whether an ordering instruction has been entered by a user associated with the subscriber receiver. If this is the case, the procedure continues to a step 330. Otherwise, the procedure stays in the step 320. Preferably, the ordering instruction must be accompanied by a correct primary authorization code in order to be considered valid, and the correctness of the primary authorization code is verified locally in the subscriber receiver.

Provided that the ordering instruction is valid, the step 330 generates an order message corresponding to the ordering instruction, and a subsequent step 340 transmits the order message to the central control unit. After that, a step 350 checks whether an order confirmation message corresponding to the order message has been received, and if so, the procedure continues to a step 360. As already mentioned, the order confirmation message is preferably accompanied by a page signal sent to the subscriber receiver in order to draw the user's attention to the order confirmation message.

The step 360 checks whether a user input that re-confirms the order specified in the order confirmation message has been entered by the user who placed the order. In order to verify this (i.e. for the re-confirmation to be considered valid), the ordering instruction should therefore preferably be accompanied by a correct secondary authorization code. If a valid re-confirmation input is entered, the procedure continues to a step 370. Otherwise, the procedure stays in the step 360.

The step 370 produces an order re-confirmation message on basis of the order confirmation information and the user re-confirmation input. A final step 380, then transmits the re-confirmation message to the central control unit, for example via telephone connection or an Internet connection.

All of the process steps, as well as any sub-sequence of steps, described with reference to the figures 2 and 3 above may be controlled by means of a computer program being directly loadable into the internal memory of a computer, which includes appropriate software for controlling the necessary steps when the program is run on a computer. Furthermore, such computer programs can be recorded onto arbitrary kind of computer readable medium as well as be transmitted over arbitrary type of network and transmission medium.

The term "comprises/comprising" when used in this specification is taken to specify the presence of stated features, integers, steps or components. However, the term does not preclude the presence or addition of one or more additional features, integers, steps or components or groups thereof.

The invention is not restricted to the embodiments described with reference to the figures, but may be varied freely within the scope of the following claims.

## Claims

1. An interactive media transmission method comprising the steps of:
broadcasting a composite signal (S(C, D)) comprising a TV-signal component (C) and an associated data signal component (D) which includes information pertaining to entities (E) represented by the TV-signal component (C),
receiving the composite signal (S(C, D)) in at least one subscriber receiver (111a, 112a, 113a),
decoding the TV-signal component (C) and the associated data signal component (D) in the at least one subscriber receiver (111a, 112a, 113a),
receiving, in a first subscriber receiver (111a) of the at least one subscriber receiver (111a, 112a, 113a), a user generated ordering instruction relating to at least one entity (E) represented by the TV-signal component (C),
generating, based on the ordering instruction, an order message (msgₒ) in the first subscriber receiver (111a),
transmitting the order message (msgₒ) to a central control unit (100),
receiving the order message (msgₒ) in the central control unit (100), and generating in response thereto an order confirmation message (cf₁),
transmitting the order confirmation message (cf₁) to a first communication unit (111b) associated with the first subscriber receiver ( 111 a),
receiving the order confirmation message (cf₁) in the first communication unit (111b), and presenting therein corresponding order confirmation information to a user,
producing, based on the order confirmation information and a user re-confirmation input, a re-confirmation message (cf₂) in the first communication unit (111b), and
transmitting the re-confirmation message (cf₂) to the central control unit (100).

2. An interactive media transmission method according to claim 1**, characterized by** the steps of:
receiving the re-confirmation message (cf₂) in the central control unit (100), and
transmitting an external order message (msg-extₒ) to a server (170) associated with a provider of an entity (E) defined in the order message (msgₒ).

3. An interactive media transmission method according to claim 2, **characterized by** the steps of:
arranging for the delivery of the entity (E), and
effecting a transaction corresponding to a price of the entity (E) ordered by the user.

4. An interactive media transmission method according to any of the claims 1 - 3, **characterized by** the entity (E) representing a product occurring in a TV program event represented by the TV-signal component (C).

5. An interactive media transmission method according to any of the claims 1 - 3, **characterized by** the entity (E) representing a service occurring in a TV program event represented by the TV-signal component (C).

6. An interactive media transmission method according to any one of the preceding claims, **characterized by** the generating of the ordering instructions involving receiving a primary authorization code associated with the first user.

7. An interactive media transmission method according to claim 6, **characterized by** the step of verifying the primary authorization code in the first subscriber receiver (111a), and transmitting the order message (msgₒ) to the central control unit only if the primary authorization code is correct.

8. An interactive media transmission method according to claim 7, **characterized by** the order message (msgₒ) at least including a customer number associated with the first user, and an identification of the entity (E).

9. An interactive media transmission method according to any of the claims 6 - 8, **characterized by** the user re-confirmation input involving receiving a secondary authorization code associated with the first user, the secondary authorization code being different from the primary authorization code.

10. An interactive media transmission method according to claim 9, **characterized by** the steps of
verifying the secondary authorization code in the central control unit (100), and
completing a purchase of the entity (E) only if the secondary authorization code is correct.

11. An interactive media transmission method according to any one of the claims 7 - 10, **characterized by** before transmitting the re-confirmation message (cf₂), the method involves transmitting a page signal (P) from the central control unit (100) to the first subscriber receiver (111a), the page signal (P) including the order confirmation information.

12. An interactive media transmission method according to claim 11, **characterized by** the steps of:
receiving the page signal (P) in the first subscriber receiver (111 a),
receiving the secondary authorization code in the first communication unit (111b), and
transmitting the re-confirmation message (cf₂) by setting up a telephone connection to the central control unit (100), and forwarding the user specific data to the central control unit (100) via the telephone connection.

13. An interactive media transmission method according to claim 11, **characterized by** the steps of:
receiving the page signal (P) in the first subscriber receiver (111a),
establishing an Internet connection between the first communication unit (111b) and the central control unit (100),
receiving secondary authorization code in the first communication unit (111b), and
transmitting the re-confirmation message (cf₂) to the central control unit (100) via the Internet connection.

14. An interactive media transmission method according to any one of the preceding claims, **characterized by** the first communication unit (111b) being included in the first subscriber receiver (111 a).

15. A system for interactive media communication comprising
a central control unit (100) adapted to broadcast a composite signal (S(C, D) comprising a TV-signal component (C) and an associated data signal component (D) which pertains to entities (E) represented by the TV-signal component (C),
a database (110) containing user-specific authorization data (R) pertaining to each of at least one user of the system,
a primary signal distribution medium (140, 150) adapted to transmit the composite signal (S(C, D) from a transmission resource (130) to at least one subscriber receiver (111a, 112a, 113a) which each is associated with at least one user, and
a supplementary signal distribution medium (160) in addition to the primary signal distribution medium (140, 150), the supplementary signal distribution medium (160) being adapted to transmit an order message (msgₒ) being generated in
a first subscriber receiver (111a) on basis of a user's ordering instruction relating to at least one entity (E) which is represented by the TV-signal component (C) to the central control unit (100), and
return an order confirmation message (cf₁) generated by the central control unit (100) in response to the order message (msgₒ), **characterized in that**
a communication unit (111b) is associated with each user, the communication unit (111b) being adapted to
receive the order confirmation message (cf₁) and based thereon present corresponding order confirmation information to the user,
receive a user confirmation input containing the user-specific data for a first user which is associated with the first subscriber receiver (111 a),
produce a re-confirmation message (cf₂) based on the order confirmation message (cf₁) and the user confirmation input, and
transmit the re-confirmation message (cf₂) to the central control unit (100).

16. A system according to claim 15, **characterized in that** the user specific identification data includes a primary authorization code to be entered by the first user in order to produce a valid order message (msgₒ) and a secondary authorization code to be entered by the first user in order to produce a valid re-confirmation message (cf₂).

17. A system according to any one of the claims 15 or 16, **characterized in that** the user-specific authorization data (R) includes relevant payment information for effecting purchases in respect of each of the at least one user of the system.

18. A system according to any one of the claims 15 - 17, **characterized in that**
the first subscriber receiver (111a) is adapted to verify the correctness of the primary authorization code, and
the central control unit (100) is adapted to verify the correctness of the secondary authorization code.

19. A system according to any one of the claims 15 - 18, **characterized in that** first communication unit (111b) being adapted to exchange signals over a wireless interface.

20. A system according to any one of the claims 15 - 19, **characterized in that** the first subscriber receiver (111a) comprises the first communication unit ( 111 b).

21. A system according to any one of the claims 15 - 20, **characterized in that** the first communication unit (111b) is a telephone terminal.

22. A system according to any one of the claims 15 - 20, **characterized in that** the first communication unit (111b) is a computer terminal with an interface towards the Internet.

23. A system according to any one of the claims 15 - 22, **characterized in that**
the first subscriber receiver (111a) is associated with a positioning equipment for determining the geographical position of the first subscriber receiver (111a), and
the first subscriber receiver (111a) is adapted to present a content decoded from the associated data signal component (D) on basis of a position signal from the positioning equipment such that the presented content has a relatively high degree of relevance to a user associated being with the first subscriber receiver (111a).
